# EUROPÄISCHE PATENTSCHRIFT

(11) **EP 4 481 595 B1**
(45) Veröffentlichungstag und Bekanntmachung des Hinweises auf die Patenterteilung: **01.04.2026**
(21) Anmeldenummer: 23180987.2
(22) Anmeldetag: 22.06.2023
(51) Int. Cl.: G06F 21/31, G06F 21/33, G06F 21/44, G06F 21/45, G06F 21/62, H04L 9/40

(54) **WERTIGE IDENTITÄTEN, SOWIE DARAUS ABGELEITETE WERTIGE IDENTITÄTEN NEBST ZUGEHÖRIGEN PRÜFVERFAHREN**
VALUE IDENTITIES, AS WELL AS VALUE IDENTITIES DERIVED THEREFROM AND ASSOCIATED VERIFICATION METHODS
IDENTITÉS MONOVALENTS ET IDENTITÉS MONOVALENTS DÉRIVÉES AINSI QUE PROCÉDÉ DE CONTRÔLE CORRESPONDANT

(43) Veröffentlichungstag der Anmeldung: 25.12.2024
(73) Patentinhaber: Deutsche Telekom AG, 53113 Bonn (DE)
(72) Erfinder: ROOS, Andreas, 64354 Reinheim (DE); BLECKER, Andreas, 57537 Wissen (DE)
(74) Vertreter: Vossius & Partner Patentanwälte Rechtsanwälte mbB

(56) Entgegenhaltungen:
- WO-A1-01/54346
- WO-A1-2015/180673
- US-A1- 2016 142 409

## Beschreibung

Die Offenbarung betrifft ein computerimplementiertes Verfahren zur Schaffung einer zweiten digitalen Identität unter Einbeziehung einer ersten digitalen Identität sowie ein entsprechendes Computerprogramm, Identitätsprovider, Identitätsmanager, Vorrichtungen und System, sowie ein computerimplementiertes Verfahren zum Prüfen einer zweiten digitalen Identität, die unter Einbeziehung einer ersten digitalen Identität geschaffen wurde.

Digitale Identitäten ermöglichen Identitätsträger zu identifizieren, indem sie diesem Identitätsträger ein Merkmal zuordnen. Damit verkörpert die Identität, je nach Art und Form der Ausprägung des Merkmals, unter anderem die Möglichkeit, den Identitätsträger beispielsweise in virtualisierten oder nicht realen Umgebungen zu präsentieren und damit eine eindeutige Beziehung zu dem realen Identitätsträger herzustellen. Beispiele für einen Identitätsträger sind eine Person, eine Sache (z.B. Maschine, Gerät), oder sonstiges (z.B. eine Dienstleistung im Cloudumfeld).

Digitale Identitäten sind in unterschiedlichster Ausprägung bekannt und verfügen jedoch meist über gleichartige Problemstellungen, die sich typischerweise in einem hohen Aufwand und in schlechter Handhabung niederschlagen. Hierzu zählen unter Anderem folgende Kernprobleme: Die Registrierungsverfahren sind aufwendig und handhabungsintensiv (d.h. z. B. in der Zuordnung einer Person (Identitätsträger) zu einer digitalen Identität). Ähnliche Services haben mehrere Identitäten. Die Identität muss sicher an den entsprechenden Identitätsträger distribuiert werden. Fehlende Subsummierungsmöglichkeiten von digitalen Identitäten (d.h. eine Identität für mehrere Services) führen durch die Mannigfaltigkeit der Identitäten je Service zu Kontrollverlust. Es gibt unterschiedliche Wertigkeit der Identität im erreichbaren Sicherheitsniveau. Mehrere Identitäten, die in unterschiedlichen Ausprägungen verwendet werden, führen zu einer unübersichtlichen Handhabung.

Dies führt zu kommerziellen und prozessualen Mehraufwänden während der Registrierung und Anwendung von Identitäten.

Ferner wird auf Dokumente US 2016/142409 A1, WO 2015/180673 A1 und WO 01/54346 A1 hingewiesen.

Die oben genannten Probleme sollen zumindest teilweise behoben werden. Das Registrierungsverfahren und die Nutzung von Identitäten soll vereinfacht werden. Das Sicherheitsniveau soll erhöht werden. Die Anzahl von Identitäten soll reduziert werden, sodass mehrere Services an eine oder wenige Identitäten gekoppelt werden können.

Die zuvor genannten Vorteile werden zumindest teilweise durch Merkmale der unabhängigen Ansprüche erreicht. Abhängige Ansprüche weisen bevorzugte Ausführungsformen der Erfindung auf.

Im Einzelnen umfasst die Offenbarung ein computerimplementiertes Verfahren zur Schaffung einer zweiten digitalen Identität unter Einbeziehung einer ersten digitalen Identität, wobei das Verfahren umfasst: Erzeugen einer Basisinformation unter Einbeziehung der ersten digitalen Identität; Empfangen der Basisinformation durch einen (zweiten) Identitätsprovider; Empfangen eines Authentizitätsnachweis der ersten digitalen Identität oder des Identitätsproviders durch den (zweiten) Identitätsprovider; und Erzeugen der zweiten digitalen Identität durch den (zweiten) Identitätsprovider unter Einbeziehung der Basisinformation.

Durch die abhänge Erzeugung der zweiten Identität, abhängig von der ersten Identität, kann die Erzeugung vereinfacht werden. Zur Erzeugung der zweiten digitalen Identität wird ein nicht so aufwendiges Erzeugungsverfahren, wie für die Erzeugung der ersten digitalen Identität, gebraucht. Gleichzeitig kann ein hohes Sicherheitsniveau erreicht werden. Beispielsweise existiert ein hoher Schutz gegen unerwünschte Duplizierung. Auch kann die Anzahl der Identitäten für verschiedene Services (Dienstleistungen) verringert werden. Durch das Erzeugen ausgehend von einer bestehenden ersten Identität in einer ersten Domain, kann die zweite Identität (eigentlich für eine zweite Domain) auch (zusätzlich zur zweiten Domain) in der ersten Domain bekannt sein und dort genutzt werden.

Der Ausdruck "unter Einbeziehung" in "Erzeugen der zweiten digitalen Identität durch den zweiten Identitätsprovider unter Einbeziehung der Basisinformation" bedeutet, dass weitere Informationen (zusätzlich zu der Basisinformation) in der Erzeugung der zweiten Identität genutzt werden können. Es kann ein Teil der Basisinformation oder die gesamte Basisinformation für die Erzeugung der zweiten Identität genutzt werden. Es kann ein Teil der Basisinformation oder die gesamte Basisinformation von der erzeugten zweiten Identität umfasst werden. Die Basisinformation, die unter Einbeziehung der ersten digitalen Identität erzeugt wird, kann ausschließlich auf Grundlage der ersten Identität oder auf Grundlage der ersten Identität und einer oder mehrerer weiterer Informationen erzeugt werden.

Der Begriff "Authentisierung" bezeichnet ein Vorlegen eines Nachweises (auch Authentizitätsnachweis) für das, was vorgegeben wird wahr zu sein. Der Begriff "Authentifizierung" bezeichnet die Prüfung des Nachweises, beziehungsweise das positive (oder negative oder anders geartetes) Prüfergebnis.

Die Klammern in der Phrase "(zweiter) Identitätsprovider" weisen darauf hin, dass bisher nur ein Identitätsprovider eingeführt wurde (nämlich der zweite und noch kein erster). Die Benennung als "zweiter" Identitätsprovider kann Bezug nehmen auf den in den Figuren beschriebenen "zweiten Identitätsprovider" (und/oder Identitätsprovider B).

Die Authentisierung/Authentifizierung kann auch die Sicherheit und Wertigkeit der zweiten Identität erhöhen.

Die Basisinformation kann Informationen für die Authentisierung (oder direkt einen Authentizitätsnachweis) umfassen. Dieser Authentizitätsnachweis /Information für die Authentisierung kann von der erzeugten zweiten Identität umfasst werden.

Ein Identitätsprovider kann eine Public-Key-Infrastruktur (PKI, englisch: public key infrastructure) oder etwas anderes, das digitale Identitäten ausstellt, sein.

Verschiedene Ausführungsformen können bevorzugt folgende Merkmale umfassen.

Sicherheitsrelevante Merkmale der ersten Identität und/oder der zweiten Identität können einem Sicherheitsanker nutzen. Dies erhöht die Sicherheit. Ein Sicherheitsanker kann in Hardwareform oder in Softwareform realisiert sein. Beispiele für einen Sicherheitsanker sind: TPM (Trusted Platfom Module), HSM (Hardware Security Module), SIM (Subscriber Identity Module), eSIM (embedded SIM), sichere Speicherbereich für eine Anwendung (z. B. bei loT-Chips), wie auch weitere mögliche Beispiele.

Ferner kann die die Basisinformation und/oder der Authentizitätsnachweis ein Sicherheitsmerkmal umfassen.

Ein Sicherheitsmerkmal kann eindeutig sein. Es kann global eindeutig sein oder es kann in (zumindest) einer Domain eindeutig sein. Das Sicherheitsmerkmal kann eins oder mehrere, nicht abschliessend, der folgenden umfassen/sein: Mobile Subscriber Integrated Services Digital Network Number, MSISDN, International Mobile Subscriber Identity, IMSI, Gerneric Public Subscription Identifier, GPSI, Permanent Equipment Identifier, PEI, ein Geheimnis, eine Signatur und ein Token. In einer Ausführungsform darf das Sicherheitsmerkmal nicht vervielfältigbar und/oder veränderbar sein. Das Sicherheitsmerkmal kann aus einem Sicherheitsanker ausgelesen, oder dort erzeugt sein. Das Sicherheitsmerkmal kann ein fallweise generiertes Geheimnis sein.

Die Basisinformation kann eine Grundinformation und ein Sicherheitsmerkmal umfassen. Eine Grundinformation kann eine Information aus der ersten digitalen Identität sein, die auch von der zweiten digitalen Identität umfasst werden soll. Das Sicherheitsmerkmal kann ein Authentizitätsnachweis sein. Die Grundinformation kann das Sicherheitsmerkmal sein. Es kann zusätzlich zur Grundinformation auch das Sicherheitsmerkmal von der zweiten digitalen Identität umfasst werden. Es ist möglich, dass das Sicherheitsmerkmal nicht von der zweiten digitalen Identität umfasst werden soll (und auch nicht wird). In diesem Fall kann das Sicherheitsmerkmal nach erfolgter Authentifizierung (/Authentisierung) verworfen werden.

Ferner kann das Verfahren umfassen: Schaffen einer dritten digitalen Identität unter Einbeziehung der zweiten digitalen Identität, umfassend folgende Schritte: Erzeugen einer zweiten Basisinformation unter Einbeziehung der zweiten digitalen Identität; Empfangen der zweiten Basisinformation; und Erzeugen der dritten digitalen Identität unter Einbeziehung der zweiten Basisinformation.

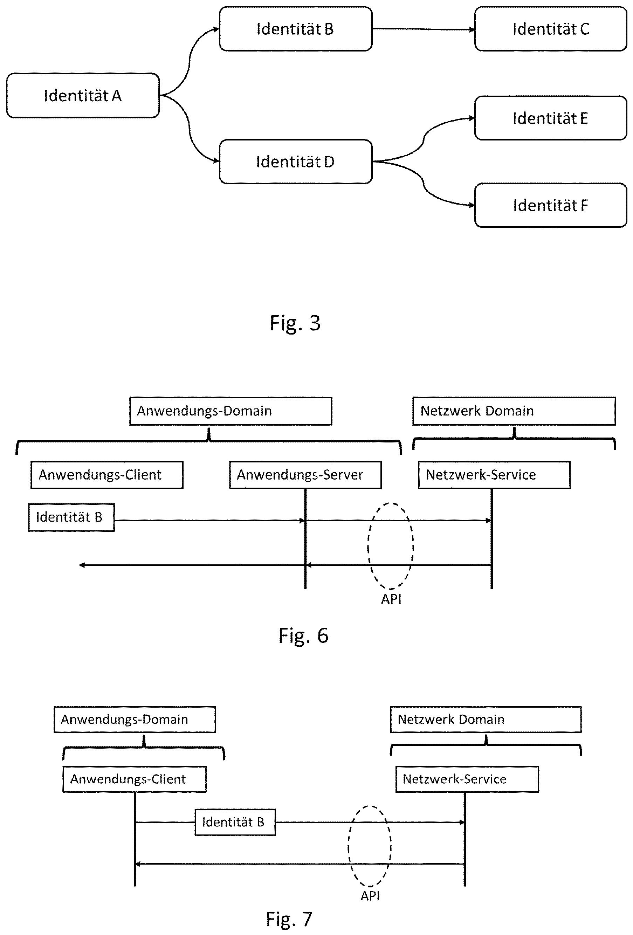

Dies repräsentiert eine kettenweise Erschaffung von digitalen Identitäten: Die dritte digitale Identität ist auf Grundlage der zweiten digitalen Identität geschaffen, welche wiederum auf Grundlage der ersten digitalen Identität geschaffen wurde. Es können auch mehrere digitale Identitäten auf Grundlage derselben Identität geschaffen werden. Mehr hierzu wird weiter unten mit Figur 3 beschrieben.

Ferner kann die Basisinformation von dem ersten Identitätsprovider erzeugt werden, und das Verfahren kann ferner umfassen: Erzeugen der ersten digitalen Identität durch den ersten Identitätsprovider; und Senden der Basisinformation durch den ersten Identitätsprovider an den (zweiten) Identitätsprovider.

In diesem Fall kann der erste Identitätsprovider in der Basisinformation sowohl eine Information, die von der zweiten Identität umfasst werden soll (Grundinformation), wie auch einen Authentizitätsnachweis senden. Alternativ kann der erste Identitätsprovider die Grundinformation und den Authentizitätsnachweis separat an den zweiten Identitätsprovider senden. Wird ein Authentizitätsnachweis gesendet, kann der (zweite) Identitätsprovider, fallweise über einen Identitätsmanager, diese authentifizieren.

Ferner kann die Basisinformation von einem Client erzeugt werden, und das Verfahren kann ferner umfassen: Senden eines Antrags auf Ausstellung der zweiten digitalen Identität und Senden der Basisinformation durch den Client zu dem (zweiten) Identitätsprovider; Prüfen des Antrags durch den (zweiten) Identitätsprovider; und Senden der erzeugten zweiten digitalen Identität von dem (zweiten) Identitätsprovider zu dem Client.

Der Client kann ein Client für die Domain der (zu erzeugenden) zweiten Identität sein. Die vom Clienten erzeugte Basisinformation kann sowohl eine Information, die von der zweiten Identität umfasst werden soll (Grundinformation), wie auch einen Authentizitätsnachweis (Authentisierung) umfassen. Die Grundinformation und den Authentizitätsnachweis können gemeinsam oder separat gesendet werden. Der Antrag auf Ausstellung und die Basisinformation können gemeinsam oder separat gesendet werden.

Ferner kann der Antrag ein Sicherheitsmerkmal als Authentizitätsnachweis der ersten digitalen Identität umfassen, und das Verfahren kann ferner umfassen: Senden einer Anfrage auf Authentifizierung des Authentizitätsnachweis von dem (zweiten) Identitätsprovider an einen ersten Identitätsprovider zusammen mit dem Authentizitätsnachweis; und Empfangen einer Antwort auf die Anfrage durch den zweiten Identitätsprovider von dem ersten Identitätsprovider, wobei die Antwort die Authentifizierung umfasst.

Der Authentizitätsnachweis kann die zuvor genannte Authentisierung sein. Der Authentisierungsnachweis kann das Sicherheitsmerkmal sein. Der Authentizitätsnachweis kann ein sicheres Merkmal der ersten digitalen Identität sein, das die Echtheit der ersten digitalen Identität (beziehungsweise der Information/Authentizitätsnachweis aus der ersten digitalen Identität) nachweist. Es ist möglich, dass der Authentizitätsnachweis nicht statisch ist.

Ferner können die erste digitale Identität und die zweite digitale Identität in verschiedenen Domains zur Anwendung kommen.

Eine Domain kann der logischen Gruppierung von Objekten dienen. Beispiele für Objekte sind Nutzer, Server, PC, Drucker, Netzinfrastruktur, Applikationen, etc., die über eine Identitätsstruktur verfügen kann. Die Objekte können die Eigenschaft haben, um Identitätsträger zu sein. Domains können auch territorial verschiedene Bereiche zugeordnet sein (auch zusätzlich zu weiteren Zuordnungen). Domains können für verschiedene Themenbereiche eingerichtet sein. Domains können in einem Beispiel dem OSI Referenzmodell (Open System Interconnection model) entsprechen (also wären folgende Schichten verschiedene Layer: Bitübertragungsschicht (Physical Layer), Sicherungsschicht (Data Link Layer), Vermittlungsschicht (Network Layer), Transportschicht (Transport Layer), Sitzungsschicht (Session Layer), Darstellungsschicht (Presentation Layer), und Anwendungsschicht (Application Layer)).

Normalerweise kommt eine digitale Identität in einer Domain zur Anwendung. Das heißt, dass mit der digitalen Identität Zugang zu einem Dienst (Dienst, Service, Applikation, Geräte, Systeme, etc.) in der entsprechenden Domain gewährt wird. Beispielsweise kann ein Zertifikat (Identität) in der Anwendungsschicht (Domain) Zugang zu einem Web-Service (Dienst) verschaffen. In einem Beispiel kann ein Zertifikat (Identität), welches in Verbindung mit einer SIM-Karte (Sicherheitsanker) steht, in einem Mobilfunknetz, (über eine entsprechende Vorrichtung) eine steuernde Wirkung haben. Dies ist auch beispielhaft unten in Bezug auf Figuren 6 und 7 beschrieben.

Die Offenbarung umfasst auch ein Computerprogramm, umfassend Befehle, die bei der Ausführung des Programms durch einen Computer diesen veranlassen, das Verfahren nach einen der vorherig genannten Aspekte auszuführen.

Das Computerprogramm kann auch auf mehreren Computern, virtualisiert, laufen und das Verfahren ausführen. Das Computerprogramm kann auf einem Computerspeichermedium gespeichert sein.

Die Offenbarung umfasst auch einen (zweiten) Identitätsprovider, eingerichtet um: eine Basisinformation zu empfangen, wobei die Basisinformation unter Einbeziehung einer ersten digitalen Identität erzeugt wurde; einen Authentizitätsnachweis zu empfangen; und eine zweite digitale Identität unter Einbeziehung der Basisinformation zu erzeugen.

Dieser (zweite) Identitätsprovider kann der (zweite) Identitätsprovider wie zuvor genannt sein.

Die Offenbarung umfasst auch eine Vorrichtung eingerichtet, um: Basisinformation unter Einbeziehung einer ersten digitalen Identität zu erzeugen; die Basisinformation zu einem (zweiten) Identitätsprovider zu schicken; und einen Authentizitätsnachweis an den zweiten Identitätsprovider zu senden.

Die Vorrichtung kann ein erster Identitätsprovider (wie zuvor und unten genannt) oder ein (Application-)Client oder ein anderes Teil sein.

Die Offenbarung umfasst auch ein System umfassend folgende zuvor genannte Teile: den (zweiten) Identitätsprovider und die Vorrichtung, wobei das System eingerichtet ist, eins der zuvor genannten Verfahren auszuführen.

Das System und/oder einzelne Teile des Systems können Computer (in verschiedenen Formen, wie Server, Virtualisierung, Personal Computer, Laptop, Smartphone, oder Anderes) sein.

Die Offenbarung umfasst auch ein computerimplementiertes Verfahren zum Prüfen einer zweiten digitalen Identität, die unter Einbeziehung einer Information einer ersten digitalen Identität geschaffen wurde, wobei das Verfahren umfasst: Empfangen der zweiten digitalen Identität durch einen Identitätsmanager; Prüfen der zweiten digitalen Identität durch einen (zweiten) Identitätsprovider, der die zweite digitale Identität erzeugt hat; Senden der Information der ersten digitalen Identität von dem (zweiten) Identitätsprovider zu einem ersten Identitätsprovider, der die erste digitale Identität erzeugt hat; und Prüfen der Information der ersten digitalen Identität durch den ersten Identitätsprovider.

Die hier genannte zweite digitale Identität kann die zuvor genannte erzeugte zweite digitale Identität sein. Ein solches Verfahren zum Prüfen einer digitalen Identität kann genutzt werden, um zu prüfen, ob Zugang zu einem Dienst in einer Domain gewährt werden soll.

Das computerimplementiertes Verfahren kann ferner umfassen: Senden einer Anfrage auf Prüfung zu dem (zweiten) Identitätsprovider durch den Identitätsmanager.

Das computerimplementiertes Verfahren kann ferner umfassen: Senden eines Ergebnisses der Prüfung der Information der ersten digitalen Identität von dem ersten Identitätsprovider an den (zweiten) Identitätsprovider.

Die erste digitale Identität kann Zugang zu einem ersten Dienst in einer ersten Domain ermöglichen und die zweite digitale Identität kann Zugang zu einem zweiten Dienst in einer zweiten Domain ermöglichen. In diesem Zusammenhang kann das computerimplementierte Verfahren ferner umfassen: Verwenden des ersten Dienstes in der ersten Domain und des zweiten Dienstes in der zweiten Domain, ohne dass ein ersten Identitätsmanager die erste digitale Identität gesondert geprüft hat.

In diesem Fall kann die zweite digitale Identität Zugang zu Diensten in zwei verschiedenen Domains verschaffen. Auch kann mit dem Verfall (z. B. Gültigkeit) der ersten digitalen Identität auch der Verfall der zweiten digitalen Identität einhergehen und somit der Status der ersten digitalen Identität Einfluss auf die zweite digitale Identität nehmen.

Die Offenbarung umfasst auch ein weiteres computerimplementiertes Verfahren. In diesem weiteren computerimplementierten Verfahren kann eine erste digitale Identität Zugang zu einem ersten Dienst in einer ersten Domain ermöglichen und eine zweite digitale Identität kann Zugang zu einem zweiten Dienst in einer zweiten Domain ermöglichen, wobei die zweite digitale Identität unter Einbeziehung einer Information einer ersten digitalen Identität geschaffen wurde. Das weitere computerimplementierte Verfahren umfasst: Verwenden der zweiten digitalen Identität in einem dritten Dienst in der ersten Domain oder in der zweiten Domain, und in dem zweiten Dienst in der zweiten Domain.

Eine abgeleitete zweite digitale Identität kann Zugang zu mehreren Diensten in der ersten und/oder zweiten Domain ermöglichen. Somit werden weniger Identitäten benötigt.

Die beschriebenen Vorteile sind weder limitierend noch exklusiv für die entsprechenden Aspekte. Ein Aspekt kann weitere, nicht explizit genannte Vorteile haben.

Die hier offengelegten beispielhaften Ausführungsformen und Beispiele sind darauf ausgerichtet, Merkmale bereitzustellen, die durch Bezugnahme auf die folgende Beschreibung in Verbindung mit den beigefügten Figuren leicht ersichtlich werden. In Übereinstimmung mit verschiedenen Ausführungsformen werden hier beispielhafte Systeme, Verfahren, Geräte und Computerprogrammprodukte offengelegt. Es versteht sich jedoch, dass diese Ausführungsformen als Beispiele und nicht als Beschränkungen dargestellt werden, und es wird für diejenigen, die die vorliegende Offenbarung gelesen haben und über normale Fachkenntnisse verfügen, offensichtlich sein, dass verschiedene Änderungen an den offengelegten Ausführungsformen vorgenommen werden können, während sie im Rahmen der vorliegenden Offenbarung bleiben.

Daher ist die vorliegende Offenbarung nicht auf die hierin beschriebenen und dargestellten beispielhaften Ausführungsformen und Anwendungen beschränkt. Darüber hinaus sind die spezifische Reihenfolge und/oder Hierarchie der Schritte in den hier offengelegten Verfahren lediglich beispielhafte Ansätze. Auf der Grundlage von Konstruktionsvorlieben kann die spezifische Reihenfolge oder Hierarchie der Schritte der offengelegten Verfahren oder Prozessen neu geordnet werden, während sie im Rahmen der vorliegenden Offenbarung bleibt. Diejenigen, die sich mit der Materie auskennen, werden daher verstehen, dass die hier offengelegten Verfahren und Techniken verschiedene Schritte oder Handlungen in einer Beispielreihenfolge darstellen, und die vorliegende Offenbarung ist nicht auf die spezifische Reihenfolge oder Hierarchie beschränkt, sofern nicht ausdrücklich etwas anderes angegeben ist.

Es versteht sich auch, dass jede Bezugnahme auf ein Element hier mit einer Bezeichnung wie "erstes", "zweites" usw. nicht generell die Menge oder Reihenfolge dieser Elemente begrenzt. Vielmehr können diese Bezeichnungen hier als praktisches Mittel zur Unterscheidung zwischen zwei oder mehr Elementen oder Instanzen eines Elements verwendet werden. Der Hinweis auf ein erstes und ein zweites Element bedeutet also nicht, dass nur zwei Elemente verwendet werden können oder dass das erste Element dem zweiten Element auf irgendeine Weise vorausgehen muss.

Darüber hinaus wird eine Person, die über normale Fachkenntnisse verfügt, verstehen, dass Informationen und Signale mit einer Vielzahl verschiedener Technologien und Techniken dargestellt werden können. So können beispielsweise Daten, Anweisungen, Befehle, Informationen, Signale, Bits und Symbole, auf die in der Beschreibung Bezug genommen wird, durch Spannungen, Ströme, elektromagnetische Wellen, magnetische Felder oder Teilchen, optische Felder oder Teilchen oder eine beliebige Kombination davon dargestellt werden.

Der Fachmann wird ferner verstehen, dass jeder der verschiedenen logischen Blöcke, Einheiten, Prozessoren, Mittel, Schaltungen, Methoden und Funktionen, die im Zusammenhang mit den hierin offengelegten Aspekten beschrieben werden, durch elektronische Hardware (z. B. eine digitale Implementierung, eine analoge Implementierung oder eine Kombination aus beiden), Firmware, verschiedene Formen von Programm- oder Designcode, der Anweisungen enthält (die hier der Einfachheit halber als "Software" oder "Softwareeinheit" bezeichnet werden können), oder eine beliebige Kombination dieser Techniken implementiert werden kann.

Um diese Austauschbarkeit von Hardware, Firmware und Software zu verdeutlichen, wurden verschiedene Komponenten, Blöcke, Einheiten, Schaltkreise und Schritte allgemein im Hinblick auf ihre Funktionalität beschrieben. Ob eine solche Funktionalität als Hardware, Firmware oder Software oder als Kombination dieser Techniken implementiert wird, hängt von der jeweiligen Anwendung und den dem Gesamtsystem auferlegten konstruktiven Beschränkungen ab. Fachleute können die beschriebene Funktionalität auf verschiedene Weise für jede einzelne Anwendung implementieren, aber solche Implementierungsentscheidungen führen nicht zu einer Abweichung vom Anwendungsbereich der vorliegenden Offenbarung. Gemäß verschiedenen Ausführungsformen kann ein Prozessor, ein Gerät, eine Komponente, ein Schaltkreis, eine Struktur, eine Maschine, eine Einheit usw. so konfiguriert werden, dass er/sie eine oder mehrere der hier beschriebenen Funktionen ausführt. Der Begriff "konfiguriert für" oder "konfiguriert für", wie er hier in Bezug auf eine bestimmte Operation oder Funktion verwendet wird, bezieht sich auf einen Prozessor, ein Gerät, eine Komponente, eine Schaltung, eine Struktur, eine Maschine, eine Einheit usw., der/die physisch so konstruiert, programmiert und/oder angeordnet ist, dass er/sie die bestimmte Operation oder Funktion ausführt.

Darüber hinaus versteht der Fachmann, dass verschiedene hier beschriebene logische Blöcke, Einheiten, Geräte, Komponenten und Schaltungen in einem integrierten Schaltkreis (IC) implementiert oder von diesem ausgeführt werden können, der einen Universalprozessor, einen digitalen Signalprozessor (DSP), einen anwendungsspezifischen integrierten Schaltkreis (ASIC), ein Field Programmable Gate Array (FPGA) oder ein anderes programmierbares Logikgerät oder eine beliebige Kombination davon umfassen kann. Die logischen Blöcke, Einheiten und Schaltungen können ferner Antennen und/oder Sende-/Empfangsgeräte umfassen, um mit verschiedenen Komponenten innerhalb des Netzes oder des Geräts zu kommunizieren. Ein Allzweckprozessor kann ein Mikroprozessor sein, alternativ kann der Prozessor aber auch ein beliebiger konventioneller Prozessor, Controller oder Zustandsautomat sein. Ein Prozessor kann auch als eine Kombination von Recheneinheiten implementiert werden, z. B. eine Kombination aus einem DSP und einem Mikroprozessor, eine Vielzahl von Mikroprozessoren, ein oder mehrere Mikroprozessoren in Verbindung mit einem DSP-Kern oder jede andere geeignete Konfiguration zur Ausführung der hier beschriebenen Funktionen. Wenn die Funktionen in Software implementiert sind, können sie als eine oder mehrere Anweisungen oder Codes auf einem computerlesbaren Medium gespeichert werden. So können die Schritte eines hier offengelegten Verfahrens oder Algorithmus als Software implementiert werden, die auf einem computerlesbaren Medium gespeichert ist.

Zu den computerlesbaren Medien gehören sowohl Computerspeichermedien als auch Kommunikationsmedien, einschließlich aller Medien, mit denen ein Computerprogramm oder ein Code von einem Ort zum anderen übertragen werden kann. Ein Speichermedium kann jedes verfügbare Medium sein, auf das ein Computer zugreifen kann. Solche computerlesbaren Medien können beispielsweise RAM, ROM, EEPROM, CD-ROM oder andere optische Plattenspeicher, Magnetplattenspeicher oder andere magnetische Speichervorrichtungen oder jedes andere Medium sein, das zur Speicherung des gewünschten Programmcodes in Form von Anweisungen oder Datenstrukturen verwendet werden kann und auf das ein Computer zugreifen kann.

In diesem Dokument bezieht sich der Begriff "Einheit", wie er hier verwendet wird, auf Software, Firmware, Hardware und jede Kombination dieser Elemente zur Ausführung der hier beschriebenen zugehörigen Funktionen. Darüber hinaus werden die verschiedenen Einheiten zum Zweck der Diskussion als einzelne Einheiten beschrieben; wie jedoch für einen Fachmann offensichtlich ist, können zwei oder mehr Einheiten kombiniert werden, um eine einzige Einheit zu bilden, die die zugehörigen Funktionen gemäß den Ausführungsformen der vorliegenden Offenbarung ausführt.

Zusätzlich können Speicher oder andere Speichermedien sowie Kommunikationskomponenten in Ausführungsformen der vorliegenden Offenbarung verwendet werden. Aus Gründen der Übersichtlichkeit wurden in der obigen Beschreibung Ausführungsformen der vorliegenden Offenbarung mit Bezug auf verschiedene Funktionseinheiten und Prozessoren beschrieben. Es wird jedoch deutlich, dass jede geeignete Verteilung der Funktionalität zwischen verschiedenen Funktionseinheiten, Verarbeitungslogikelementen verwendet werden kann, ohne dass dies der vorliegenden Offenbarung abträglich ist. So können beispielsweise Funktionen, die in der Abbildung von separaten Verarbeitungslogikelementen oder Steuerungen ausgeführt werden, von demselben Verarbeitungslogikelement oder derselben Steuerung ausgeführt werden. Daher sind Verweise auf spezifische Funktionseinheiten nur Hinweise auf ein geeignetes Mittel zur Bereitstellung der beschriebenen Funktionalität und nicht als Hinweis auf eine strenge logische oder physische Struktur oder Organisation zu verstehen.

Verschiedene Modifikationen der in dieser Offenbarung beschriebenen Implementierungen sind für den Fachmann ohne weiteres ersichtlich, und die hierin definierten allgemeinen Grundsätze können auf andere Implementierungen angewandt werden, ohne vom Umfang dieser Offenbarung abzuweichen. Daher ist die Offenbarung nicht auf die hier gezeigten Implementierungen beschränkt, sondern hat den größtmöglichen Anwendungsbereich, der mit den hier offengelegten neuen Merkmalen und Grundsätzen vereinbar ist, wie sie in den untenstehenden Ansprüchen aufgeführt sind.

Die obigen und andere Aspekte und ihre Implementierungen werden in den Zeichnungen, den Beschreibungen und den Ansprüchen ausführlicher beschrieben.
Fig. 1 ist eine schematische Abbildung eines Verfahrens nach einer Ausführungsform der Offenbarung.
Fig. 2 ist eine schematische Abbildung eines weiteren Verfahrens nach einer Ausführungsform der Offenbarung.
Fig. 3 ist eine schematische Abbildung von Herstellungsabhängigkeiten zwischen Identitäten nach einer Ausführungsform der Offenbarung.
Fig. 4 ist eine schematische Abbildung eines Prüfverfahrens und der Interaktion bei dem Prüfverfahren nach einer Ausführungsform der Offenbarung.
Fig. 5 ist eine schematische Abbildung der Nutzung von Identitäten.
Fig. 6 ist eine schematische Abbildung eines Beispiels zur Anwendung einer Identität in zwei Domains.
Fig. 7 ist eine schematische Abbildung eines Beispiels zur Anwendung einer Identität in zwei Domains.

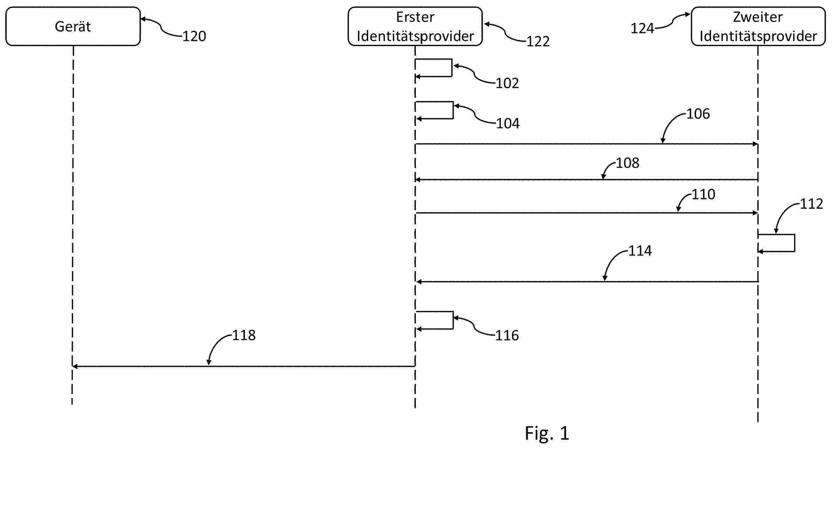

Figur 1 ist eine schematische Abbildung eines Verfahrens nach einer Ausführungsform der Offenbarung. Dieses Verfahren zeigt die Erzeugung einer zweiten digitalen Identität auf Grundlage einer ersten digitalen Identität zum Beispiel im Produktionsprozess der ersten digitalen Identität.

In Schritt 102 wird die erste digitale Identität von einem ersten Identitätsprovider 122 produziert (beziehungsweise erzeugt).

In Schritt 104 erzeugt der erste Identitätsprovider 122 eine Basisinformation. Die Basisinformation umfasst eine Information (Grundinformation), die Teil der zweiten digitalen Identität werden soll (und bevorzugt auch Teil der ersten digitalen Identität ist). Die Basisinformation kann auch ein Sicherheitsmerkmal als Authentizitätsnachweis (Authentisierung) umfassen. Alternativ kann die Basisinformation das Sicherheitsmerkmal als Authentizitätsnachweis umfassen. Der Authentizitätsnachweis kann ein Nachweis der Authentizität des ersten Identitätsproviders 122 oder der ersten digitalen Identität sein (also ein Authentizitätsnachweis, welcher zur Authentisierung des ersten Identitätsproviders beziehungsweise der ersten digitalen Identität genutzt werden kann).

In Schritt 106 wird der Authentizitätsnachweis des ersten Identitätsproviders (oder der ersten digitalen Identität) vom ersten Identitätsprovider 122 an den zweiten Identitätsprovider 124 gesendet. In Schritt 108 wird eine Nachricht über die erfolgreiche Authentifizierung vom zweiten Identitätsprovider 124 an den ersten Identitätsprovider 122 gesendet. In Schritt 110 wird die Information, die Teil der zweiten digitalen Identität werden soll (Grundinformation), vom ersten Identitätsprovider 122 an den zweiten Identitätsprovider 124 gesendet. Es ist auch möglich, dass anstelle dieser drei Schritt (106, 108, und 110) die Grundinformation und das Sicherheitsmerkmal (zum Beispiel als Authentisierung oder als Authentifizierung) gleichzeitig geschickt wird oder zuerst die Grundinformation und dann das Sicherheitsmerkmal geschickt wird. Auch können Schritte 104, 106 und 108 weggelassen werden.

In Schritt 112 wird die zweite digitale Identität unter Berücksichtigung der zuvor (in Schritt 104) erzeugten Grundinformation von dem zweiten Identitätsprovider 124 erzeugt. Es können auch weitere Informationen (wie zum Beispiel der Authentizitätsnachweis) für die Erzeugung der zweiten digitalen Identität berücksichtigt werden.

In Schritt 114 wird die zweite digitale Identität von dem zweiten Identitätsprovider 124 an den ersten Identitätsprovider 122 gesendet.

In Schritt 116 wird die zweite digitale Identität in einen Sicherheitsanker eingebracht, fallweise nebst Sicherheitsmerkmalen der zweiten Identität.

In Schritt 118 werden die erste und zweite digitale Identität an ein Gerät (wie ein Nutzerendgerät (user equipment - UE), Computer, Server, Smartphone, oder Anderes) ausgegeben. Dies kann beispielsweise eine Auslieferung per Post, oder ein digitales Versenden sein. Das Gerät kann die digitalen Identitäten nutzen, um Zugang zu Diensten verschiedener Domains er erlangen. Das Gerät kann hier den Identitätsträger repräsentieren oder dem Identitätsträger gehören oder in anderer Art in Verbindung zu dem Identitätsträger stehen.

In einem Beispiel kann die erste digitale Identität eine Erzeugung einer SIM-Karte mit Netzwerkidentität sein, die Basisinformation (und/oder die Grundinformation, die Teil der zweiten digitalen Identität werden soll) kann eins der folgenden umfassen: MSISDN (Mobile Subscriber Integrated Services Digital Network Number), IMSI (International Mobile Subscriber Identity), GPSI (Gerneric Public Subscription Identifier), PEI (Permanent Equipment Identifier). In dem Beispiel kann die zweite digitale Identität ein Zertifikat für eine Anwendung sein.

Die Schritte des Verfahrens der Figur 1 (vielleicht ohne Schritt 118) können alle in einer Organisation (also auf Computern/Servern/Systemen/Infrastrukturen/Services/Endgeräten eines Unternehmens) sein.

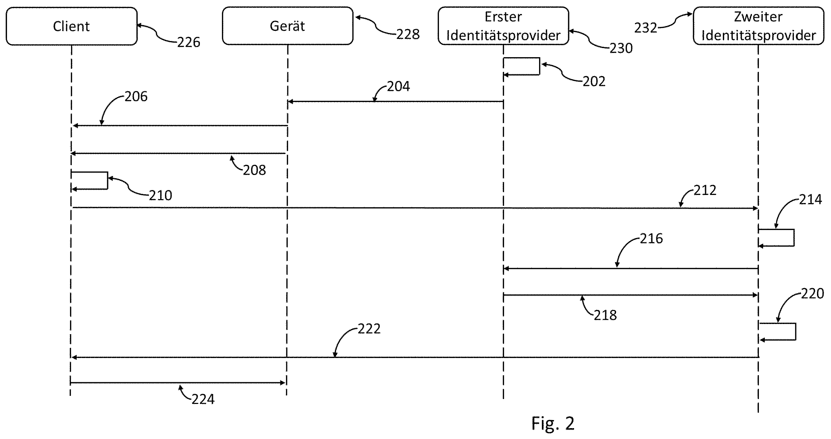

Figur 2 ist eine schematische Abbildung eines weiteren Verfahrens nach einer Ausführungsform der Offenbarung. Dieses Verfahren zeigt eine Erzeugung einer zweiten digitalen Identität, beispielsweise außerhalb eines Produktionsprozesses einer ersten digitalen Identität. Einige Schritte ähneln Schritten aus dem Verfahren der Figur 1 oder sind gar gleich. Um Wiederholungen zu vermeiden, werden nicht alle Aspekte dieser Schritte wiederholt. Der Fachmann versteht jedoch, dass diese Aspekte auch in den Schritten der Figur 2 vorkommen können.

In Schritt 202 wird die erste digitale Identität vom ersten Identitätsprovider 230 erzeugt.

In Schritt 204 wird die erste digitale Identität an ein Gerät (wie ein Nutzerendgerät (user equipment - UE), Computer, Server, oder Anderes) ausgegeben. Dies kann beispielsweise eine Auslieferung per Post sein.

In Schritt 206 werden von einem Clienten 226 Grundinformation, die Teil der zweiten digitalen Identität werden sollen, aus der ersten digitalen Identität ausgelesen (beispielsweise aus einem Sicherheitsanker).

Der Client 226 kann beispielsweise ein Anwendungs-Client sein. Der Client 226 kann auf dem Gerät 228 ausgeführt werden.

In Schritt 208 liest der Client 226 ein fallweise generiertes Sicherheitsmerkmal (beispielsweise ein Token, Geheimnis) aus dem Sicherheitsanker aus (beispielsweise als Authentizitätsnachweis). Schritt 206 und 208 können auch gemeinsam ausgeführt werden.

Die in Schritt 206 ausgelesenen Grundinformation und das Sicherheitsmerkmal sind von einer Basisinformation umfasst (weitere von der Basisinformation umfasste Information sind möglich).

In Schritt 210 wird ein Antrag auf Erzeugung einer zweiten digitalen Identität erstellt. Dieser Antrag enthält die Basisinformation. Der Antrag kann weitere Identitätsparameter für die zweite digitale Identität umfassen.

In Schritt 212 wird der Antrag auf Erzeugung der zweiten digitalen Identität von dem Clienten 226 an den zweiten Identitätsprovider 232 gesendet. Ferner können zusätzliche Merkmale der ersten digitalen Identität gesendet werden. Der Antrag kann auch in mehreren Teilen gesendet werden. Beispielsweise können Grundinformation und Sicherheitsmerkmal (Authentizitätsnachweis) gesondert oder zusammen gesendet werden.

In Schritt 214 wird der Antrag von dem zweiten Identitätsprovider überprüft. Die Prüfung kann eine oder mehrere der folgenden Kriterien umfassen: auf Unverfälschtheit des Antrags und/oder der Bestandteile; auf Vorgaben betreffend die zweite digitale Identität; sicherheitsrelevante Aspekte; und Prüfung des übermittelten Sicherheitsmerkmal (Authentizitätsnachweis).

Schritte 216 und 218 zeigen eine beispielhafte Ausführungsform zur Authentifizierung der Basisinformation. In Schritt 216 wird das Sicherheitsmerkmal als Authentizitätsnachweis (Authentisierung; beispielsweise Authentizitätsnachweis der ersten Identität) von dem zweiten Identitätsprovider 232 an den ersten Identitätsprovider gesendet. Der erste Identitätsprovider prüft (authentifiziert) das Sicherheitsmerkmal. Damit wird überprüft, ob der Antragsteller (Client 226) bei dem ersten Identitätsprovider bekannt ist. In Schritt 218 wird das Ergebnis der Authentifizierung vom ersten Identitätsprovider 230 and den zweiten Identitätsprovider gesendet.

In Schritt 220 wird die zweite digitale Identität erzeugt, wenn die Prüfung der Schritte 214, 216, und 218 positiv verlaufen ist.

In Schritt 222 wird die zweite digitale Identität von dem zweiten Identitätsprovider 232 an den Clienten 226 übermittelt.

In Schritt 224 wird die zweite digitale Identität in einem Sicherheitsanker des Geräts 228 gespeichert.

Figur 3 ist eine schematische Abbildung von Herstellungsabhängigkeiten zwischen Identitäten nach einer Ausführungsform der Offenbarung. Es sind mehrere digitale Identitäten (A bis F) gezeigt mit Erzeugungsabhängigkeiten (Pfeile). Identität B wird auf Grundlage von Identität A erzeugt, beispielsweise mittels einer der beschriebenen Erzeugungsverfahren. In gleicher (oder ähnlicher) Weise, wie Identität B abhängig von Identität A erzeugt wird, wird Identität C anhängig von Identität B erzeugt, wird Identität D anhängig von Identität A erzeugt, wird Identität E anhängig von Identität D erzeugt, und wird Identität F anhängig von Identität D erzeugt. Es ist gezeigt, dass Ketten-Abhängigkeiten möglich sind, wie beispielsweise Identitäten A, B und C. Es wird gezeigt, dass mehrere Identitäten auf Grundlage einer anderen Identität erzeugt werden können, wie beispielsweise Identitäten D, E und F.

Auch kann es Unterschiede zwischen den Erzeugungen geben. So kann beispielsweise eine digitale Identität auf Grundlage der Grundinformation und des Sicherheitsmerkmals so erzeugt werden, dass beide (Grundinformation und Sicherheitsmerkmal) in der neuen digitalen Identität umfasst sind; und eine andere digitale Identität kann nur die Grundinformation umfassen.

In einer Kettenabhängigkeit (wie Identitäten A, B und C) kann immer das gleiche Grundmerkmal in allen Identitäten umfasst sein (Also ist das gleiche Merkmal Grundmerkmal bei der Erzeugung der Identität B wie bei der Erzeugung der Identität C). Es können aber auch verschiedene Grundmerkmale gewählt werden, so dass Identität A und C keine gleichen Merkmale umfassen.

Sind mehrere Identitäten abhängig von der gleichen Identität erzeugt worden (wie Identitäten D, E und F), können die abhängigen Identitäten die gleiche oder verschiedene Grundinformationen umfassen (und unter Einbeziehung dieser erzeugt worden sein).

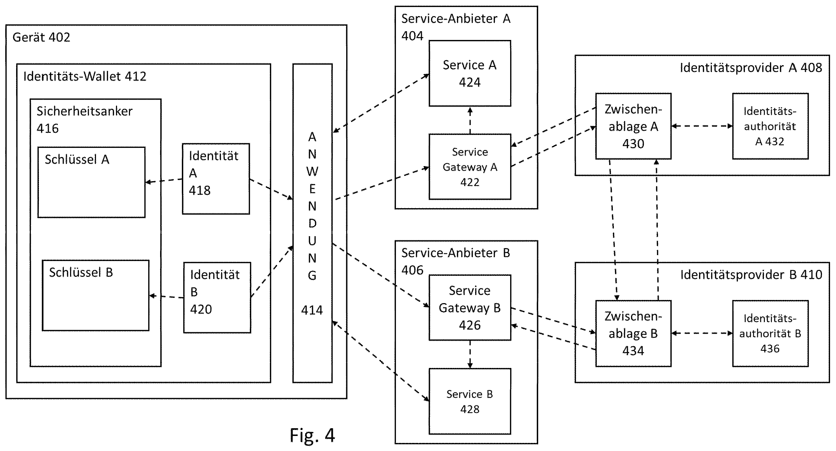

Figur 4 ist eine schematische Abbildung eines Prüfverfahrens und der Interaktion bei dem Prüfverfahren nach einer Ausführungsform der Offenbarung. Die für einen Identitätsträger ausgegebene oder ausgegebenen digitale Identitäten (kurz: Identitäten) bedingen bei deren Verwendung, dass es möglich sein muss, dort wo die Identität vorgelegt wird, oder zur Anwendung kommt, diese jederzeit auf deren Gültigkeit, Unverfälschtheit und Eigenschaften verifizieren zu können. Ergänzend können fallweise zum Ergebnis der Prüfung, auch weitere Zusatzinformationen (z. B. Parameter, Attribute, Token) zur geprüften Identität mit dem Prüfergebnis an den Anfragenden, durch den Identitätsprovider, übermittelt werden. Das Prüfverfahren nach Figur 4 ist ein beispielhaftes Prüfverfahren.

Während einige Kästen in Figur 4 reale Vorrichtungen repräsentieren, zeigen andere Kästen digitale (oder virtuelle) Konzepte.

Figur 4 zeigt ein Gerät 402, einen Service-Anbieter A 404, einen Service-Anbieter B 406, einen Identitätsprovider A 408 und einen Identitätsprovider B 410. Auch werden Interaktionen zwischen Elementen mit gestrichelten Pfeilen gezeigt (Diese werden nicht jedes Mal explizit erwähnt).

Das Gerät 402 kann ein Identitätsträger sein, dem Identitätsträger gehören oder in sonstiger Weise mit dem Identitätsträger in Verbindung stehen. Das Gerät 402 umfasst einen (digitalen) Identitäts-Wallet 412 und auf dem Gerät kann eine Anwendung 414 laufen. Der Identitäts-Wallet 412 kann Identitäten umfassen. Es sind Identität A 418 und Identität B 420 gezeigt. Die Identitäten können entsprechende Schlüssel (oder geheime Teile von den Identitäten) in einem Sicherheitsanker 416 haben. Der Sicherheitsanker 416 ist vom Gerät 402 umfasst.

Der Service-Anbieter A 404 (oder auch Service provider A) umfasst einen Service Gateway A 422 (oder Service Protokollumsetzer A) und einen Service A 424. Der Service Gateway A 422 fungiert hier als Identitätsmanager und gibt den Service A 424 frei zur Nutzung durch das Gerät 402 (beziehungsweise durch die Anwendung 414).

In ähnlicher Weise umfasst Service-Anbieter B 406 einen Service Gateway B 426 und einen Service B 428. Der Service Gateway B 426 fungiert als Identitätsmanager und gibt den Service B 428 frei zur Nutzung durch das Gerät 402.

Der Identitätsprovider A 408 umfasst eine Zwischenablage A 430 und eine Identitätsauthorität A 432. Die Identität A 418 kann von dem Identitätsprovider A 408 erzeugt worden sein. In ähnlicher Weise umfasst der Identitätsprovider B 410 eine Zwischenablage B 434 und eine Identitätsauthorität B 436. Die Identität B 420 kann von dem Identitätsprovider B 410 erzeugt worden sein.

Die Anwendung 414 greift auf die Identitäten 418 und 420 zurück (siehe gestrichelte Pfeile zwischen den entsprechenden Kästen), um Services nutzen zu können. Die Identitäten greifen auf die Schlüssel in dem Sicherheitsanker 416 zurück. Die Identität A 418 ist für die Nutzung des Service A 424 und Identität B 420 ist für die Nutzung des Service B 428.

Um Service A 424 nutzen zu können sendet die Anwendung 414 eine Anfrage an den Service Gateway A 422 mit der Identität A 418. Der Service Gateway A 422 sendet die Identität A 418 an den Identitätsprovider A 408. Der Identitätsprovider A 408 überprüft die Identität A 418 und authentifiziert diese (wenn die Prüfung positiv verlaufen ist). Dabei kann Identität A 418 und das Prüfungsergebnis, beziehungsweise die Authentifizierung, in der Zwischenablage 430 zwischengespeichert werden nach, beziehungsweise vor, dem übersenden. Die Identitätsautorität 432 kann die Identität A 418 prüfen. Die Authentifizierung (positives Prüfergebnis) wird von dem Identitätsprovider A 408 an den Service Gateway A 422 gesendet. Nach empfang eines positiven Prüfungsergebnisses gibt der Service Gateway A 422 Service A 424 zur Nutzung durch die Anwendung 414 (beziehungsweise durch das Gerät 402) frei.

In ähnlicher Weise, um Service B 428 nutzen zu können sendet die Anwendung 414 eine Anfrage an den Service Gateway B 426 mit der Identität B 420. Der Service Gateway B 426 sendet die Identität B 420 an den Identitätsprovider B 410. Der Identitätsprovider B 410 überprüft die Identität B 420 und authentifiziert diese (wenn die Prüfung positiv verlaufen ist). Dabei kann Identität B 420 und das Prüfungsergebnis, beziehungsweise die Authentifizierung, in der Zwischenablage 434 zwischengespeichert werden nach, beziehungsweise vor, dem übersenden. Die Identitätsautorität 436 kann die Identität B 420 prüfen. Die Authentifizierung (positives Prüfergebnis) wird von dem Identitätsprovider B 410 an den Service Gateway B 426 gesendet. Nach empfang eines positiven Prüfungsergebnisses gibt der Service Gateway 426 Service B 428 zur Nutzung durch die Anwendung 414 (beziehungsweise durch das Gerät 402) frei.

Die Zwischenablagen A und B 430 und 434 können eine Datenbank oder Möglichkeit einer Verwaltung von Daten sein. Sie können Datenhaltungsorte (z.B. Datenbank/Festplatte oder Ähnliches) sein, wo Zusatzinformationen (unten beschrieben) gespeichert werden und abgerufen werden können. Auch können die Zwischenablagen ein RAM (random access memory) umfassen oder sein, wo Daten zwischengespeichert werden können.

Neben einer Authentifizierung zur Freigabe zur Nutzung eines Dienstes kann die Prüfung einer Identität auch weitere Zusatzinformationen (zum Beispiel Parameter, Attribute, Token) ausgeben. Beispiele für solche Zusatzinformationen sind wie folgt:
- datums-, zeitbezogene Gültigkeitsprüfung, für einen Zeitraum (Gültig von, bis);
- Prüfung durch den oder die Identitätsprovider, ob beispielsweise die Identität für ungültig erklärt wurde;
- Prüfung besonderer Merkmale die in der Identität hinterlegt sind;
- verkettete Prüfung von Identitäten zu deren abgeleiteten Identitäten, so dass wenn die Identität von der jeweils eine oder weitere abgeleitet wurde(n) für ungültig erklärt wird, mit der Folge, dass auch die abgeleitete Identität deren Gültigkeit verliert. (Z. B. Identity A wurde für ungültig erklärt, daraus folgt, dass die von Identity A abgeleitete Identity B ebenfalls deren Gültigkeit verliert);
- Altersbeschränkung, Budgetgrenze, und/oder sonstige Subscription-Informationen.
- IP-Adresse, Session/Service ID, DNS Name

Solche Zusatzinformationen können von dem Service Gateway genutzt werden, um den entsprechenden Service nur teilweise (oder doch gar nicht) freizugeben. In einem Beispiel kann der entsprechende Service sich entsprechend der Zusatzinformationen anpassen.

Identität B 420 kann von Identität A 418 abgeleitet sein (zum Beispiel mittels einer der zuvor beschriebenen Verfahren; Identität A entspricht dann der ersten digitalen Identität und Identität B der zweiten digitalen Identität). In diesem Fall kann der Service Gateway B 426 und/oder der Service B 428 auf Zusatzinformationen der Identität A 418 (zusätzlich oder alternativ zu Zusatzinformationen der Identität B 420) reagieren (einschränken, ändern, oder ähnlich). Dies ist möglich ohne gesonderte Prüfung der Identität A 418. Im Einzelnen kann dies wie folgt umgesetzt werden:
Die Anwendung 414 (beziehungsweise das Gerät 402) sendet eine Anfrage mit Identität B 420 an den Service Gateway B 426. Dieser sendet die Identität B 420 an den Identitätsprovider B 410 zur Prüfung. Dieser sendet die Identität B 420 oder die Grundinformation (die in beiden Identitäten umfasst ist) an den Identitätsprovider A 408. Identitätsprovider A 408 prüft die Identität B 420 oder die Grundinformation. Das Ergebnis dieser Prüfung (beispielsweise Unverfälschbarkeit und/oder Charakteristik/Inhalt der Identität A) und keine, eine oder mehrere Zusatzinformationen wird an den Identitätsprovider B 410 gesendet. Identitätsprovider B 410 kann Identität B 420 zusätzlich gesondert prüfen (auf Authentifizierung und fallweise auch auf Zusatzinformationen). Das Ergebnis dieser Prüfung (oder Prüfungen; und/oder Ergebnisse von Identitätsprovider A 408; oder Teile hiervon) sendet der Identitätsprovider B 410 an den Service Gateway B 426. Dieser (und eventuell der Service B 428) kann entsprechend des Prüfungsergebnisses (umfassend die Zusatzinformationen) den Service (und/oder Teile davon) freigeben zur Nutzung durch Anwendung 414.

Auf solche Weise kann eine Sperre der Identität B 420 folgen (oder zumindest eine Verwehrung der Nutzung des Service B 428), wenn Identität A 418 bereits gesperrt ist. So kann mit einem Verfall (z.B. Gültigkeit) der Identität A 418 ein Verfall der Identität B 420 einhergehen. Somit nimmt der Status der Identität A 418 Einfluss auf die (abgeleitete) Identität B 420.

In einem Beispiel ist das Gerät 402 ein Smartphone, der Sicherheitsanker 416 ist eine Sim-Karte, Service A 424 ist ein Netzwerk-Service und Service B 428 ist ein Web-Service. Die Identität A 418 kann somit Zugang zu einem Netzwerk-Service, beispielsweise in einer Netzwerk-Domain, erlangen und Identität B 420 kann Zugang zu einem Web-Service, beispielsweise in einer Anwendungs-Domain, erlangen. Der Service Gateway B 426 kann auch Zusatzinformationen bezüglich Identität A 418 von dem Identitätsprovider A 408 erhalten, dadurch, dass Identität B 420 abhängig von Identität A 418 ist (wie zuvor beschrieben). In dem Beispiel kann so ein Web-Service und dessen Angebot auf Zusatzinformationen, die sonst nur für den Netzwerk-Service zugänglich sind, angepasst werden. Beispielsweise hat der Identitätsprovider A 408 Zusatzinformationen über ein Alter und/oder Budgetbeschränkung eines Eigentümers des Smartphones. Dann kann der Web-Service sein Angebot anpassen, indem beispielsweise bestimmte Dinge nicht zum Verkauf angeboten werden (bei einem Online-Marktplatz beispielsweise).

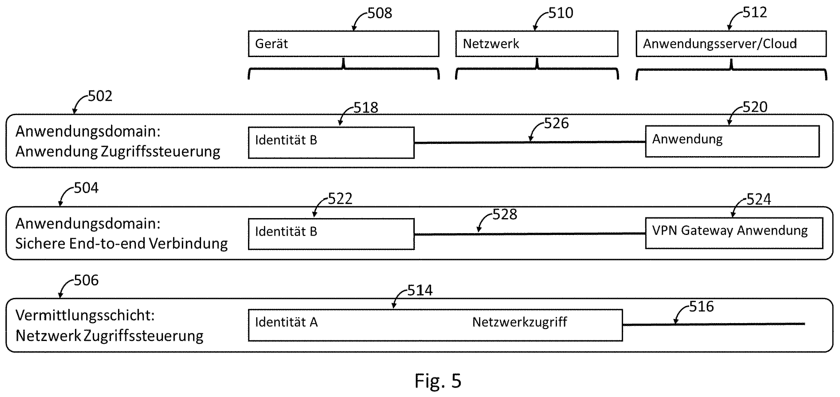

Figur 5 ist eine schematische Abbildung der Nutzung von Identitäten, beispielsweise so wie zuvor beschriebene Identitäten. Figur 5 zeigt drei Verschiedene Dienste: eine Anwendung in der Anwendungs-Domain (oben, 502), eine VPN Gateway Anwendung in der Anwendungs-Domain (Mitte, 504), und ein Netzwerkzugriff in der Netzwerk-Domain (unten, 506). Oben, über den Diensten sind Zuständigkeiten gezeigt. Links ist das Gerät als beispielhafter Identitätsträger gezeigt (508). In der Mitte ist ein Netzwerk gezeigt (510) und rechts ist ein Anwendungsserver (oder Cloud) gezeigt (512).

Identität A kann genutzt werden, um Zugriff auf das Netzwerk zu erlangen. In diesem Sinne ist die Identität A in der Zuständigkeit des Geräts (links) und in der Netzwerk Zugriffsteuerung (unten) gezeigt (Kasten 514). Der Netzwerkzugriff ist entsprechend unter Netzwerk (Mitte) gezeigt. Der Netzwerkzugriff, dank Identität A, ermöglicht die Erreichbarkeit / Konnektivität zu Anwendungsservern und vieles Mehr. Dies ist mit dem waagerechten Strich repräsentiert (516).

Identität B kann genutzt werden, um Zugriff auf den Service der Anwendung zu erlangen. Dies ist in der oberen Zeile dargestellt (Kästen 518 und 520). Identität B kann auch genutzt werden, um Zugriff auf den Service der VPN Gateway Anwendung zu erlangen. Dies ist in der mittleren Zeile dargestellt (Kästen 522 und 524). Beide Nutzungen der Anwendungen setzten eine Netzwerkverbindung (mit Netzwerkzugriff) voraus. Dies ist mit den waagerechten Linien repräsentiert (526 und 528).

Durch die abhängige Erzeugung der Identität B, abhängig von Identität A, kann Identität B Zugang zu mehreren Diensten ermöglichen. Im vorliegenden Beispiel werden so nicht drei Identitäten, sondern nur zwei Identitäten benötigt. Dies ist auch für andere Domains und mit mehr Diensten möglich.

Identität A kann für seine sicherheitsrelevanten Anteile einen Sicherheitsanker nutzen. Identität B kann, als von Identität A abgeleitete Identität, ebenfalls den Sicherheitsanker für seine sicherheitsrelevanten Anteile nutzen. Um Zugang zu einem oder mehreren Anwendungen zu erlangen kann ein Teil von Identität B (wie beispielsweise ein Zertifikat (beispielsweise nach dem Standard X.509v3)) als Identitätsnachweis genutzt werden. In diesem Sinne können die jeweiligen Identitäten zielgerichtet in der Art ihrer Ausprägung sein (in der Domain, in welcher sie angewandt werden). Also Identität A auf den Netzwerk-Zugriff und Identität B auf Zugriff auf Anwendungen. Die Identitätsausgabe und -prüfung kann über die jeweiligen Identitätsprovider geschehen.

Figuren 6 und 7 zeigen Beispiele in denen eine Identität B, welche von einer Identität A abgeleitet wurde, genutzt werden kann, um Zugang zu Services in verschiedenen Domains zu erlangen; wobei die Domains vorzugsweise die Domains sind in denen Identitäten A und B normalerweise genutzt werden, um Zugang zu Services zu erlangen (entsprechend Domain A und Domain B genannt). Dies kann dadurch möglich werden, dass entweder Identität B in der Domain A bekannt ist oder wenn Identität B zur Zugänglichmachung verwendbare Merkmale der Identität A vorlegt (und umfasst). Die erste Variante (Identität B in Domain A bekannt) kann auch für andere Domains (Domain C) funktionieren, in denen Identität A (generell) nicht genutzt werden kann, um Zugang zu erlangen.

Figur 6 zeigt ein Beispiel, in dem ein Anwendungsclient die Identität B (beispielsweise in Form eines Zertifikates) verwendet, um mit Hilfe des Anwendungsservers in der Anwendungsdomain (welches die Domain ist, in der Identität B normalerweise auch zum Zugang erlangen verwendet werden kann), über eine API-Schnittstelle (Application Programming Interfaces), ein Netzwerk-Service in der Netzwerk-Domain anzufragen (und dort zum Zugang gewähren genutzt zu werden).

Figur 7 zeigt ein Beispiel in dem der Anwendungsclient die Identität B (beispielsweise in Form eines Zertifikats) verwendet, um aus der Anwendungs-Domain über eine API-Schnittstelle, einen Netzwerk-Service in der Netzwerk-Domain (Domain A) anzufragen.

## Patentansprüche

1. Computerimplementiertes Verfahren zur Schaffung einer zweiten digitalen Identität unter Einbeziehung einer ersten digitalen Identität, wobei das Verfahren umfasst:
Erzeugen einer Basisinformation unter Einbeziehung der ersten digitalen Identität, wobei die Basisinformation einen Authentizitätsnachweis umfasst;
Empfangen (212) der Basisinformation durch einen Identitätsprovider (232);
Empfangen (212) des Authentizitätsnachweises der ersten digitalen Identität durch den Identitätsprovider (232); und
Erzeugen (220) der zweiten digitalen Identität durch den Identitätsprovider (232) unter Einbeziehung der Basisinformation;
wobei die Basisinformation von einem Client (226) erzeugt wird, und wobei das Verfahren ferner umfasst:
Senden (212) eines Antrags auf Ausstellung der zweiten digitalen Identität und senden der Basisinformation durch den Client (226) zu dem Identitätsprovider (232);
Prüfen (214) des Antrags durch den Identitätsprovider (232); und
Senden (222) der erzeugten zweiten digitalen Identität von dem Identitätsprovider (232) zu dem Client (226).

2. Computerimplementiertes Verfahren nach Anspruch 1, wobei die Basisinformation und/oder der Authentizitätsnachweis ein Sicherheitsmerkmal umfasst.

3. Computerimplementiertes Verfahren nach Anspruch 1, wobei das Verfahren ferner umfasst:
Schaffen einer dritten digitalen Identität unter Einbeziehung der zweiten digitalen Identität, umfassend folgende Schritte:
Erzeugen einer zweiten Basisinformation unter Einbeziehung der zweiten digitalen Identität;
Empfangen der zweiten Basisinformation; und
Erzeugen der dritten digitalen Identität unter Einbeziehung der zweiten Basisinformation.

4. Computerimplementiertes Verfahren nach einem der vorhergehenden Ansprüche, wobei der Antrag ein Sicherheitsmerkmal als Authentizitätsnachweis der ersten digitalen Identität umfasst, und das Verfahren ferner umfasst:
Senden einer Anfrage auf Authentifizierung des Authentizitätsnachweis von dem Identitätsprovider (232) an einen ersten Identitätsprovider (230) zusammen mit dem Authentizitätsnachweis; und
Empfangen einer Antwort auf die Anfrage durch den Identitätsprovider (232) von dem ersten Identitätsprovider (230), wobei die Antwort die Authentifizierung umfasst.

5. Computerimplementiertes Verfahren nach einem der vorhergehenden Ansprüche, wobei die erste digitale Identität und die zweite digitale Identität in verschiedenen Domains zur Anwendung kommen.

6. Computerprogramm, umfassend Befehle, die bei der Ausführung des Programms durch einen Computer diesen veranlassen, das Verfahren nach einen der Ansprüche 1 bis 5 auszuführen.

7. Identitätsprovider (232), eingerichtet um:
eine Basisinformation zu empfangen, wobei die Basisinformation unter Einbeziehung einer ersten digitalen Identität erzeugt wurde und einen Authentizitätsnachweis umfasst;
den Authentizitätsnachweis der ersten digitalen Identität zu empfangen;
Empfangen (212) eines Antrags auf Ausstellung der zweiten digitalen Identität und senden der Basisinformation den dem Client (226);
Prüfen (214) des Antrags;
eine zweite digitale Identität unter Einbeziehung der Basisinformation zu erzeugen; und
Senden (222) der erzeugten zweiten digitalen Identität zu dem Client (226).

8. Vorrichtung (226) eingerichtet, um:
Basisinformation unter Einbeziehung einer ersten digitalen Identität zu erzeugen, wobei die Basisinformation einen Authentizitätsnachweis umfasst;
die Basisinformation zu einem Identitätsprovider (232) zu schicken;
einen Authentizitätsnachweis der ersten digitalen Identität an den Identitätsprovider (232) zu senden; und
Senden (212) eines Antrags auf Ausstellung der zweiten digitalen Identität und senden der Basisinformation zu dem Identitätsprovider (232); und
Empfangen (222) der erzeugten zweiten digitalen Identität von dem Identitätsprovider (232).

9. System umfassend den Identitätsprovider (232) nach Anspruch 7 und die Vorrichtung nach Anspruch 8, wobei das System eingerichtet ist, das Verfahren nach einem der Ansprüche 1 bis 5 auszuführen.

10. Computerimplementiertes Verfahren zum Prüfen einer zweiten digitalen Identität (420), die unter Einbeziehung einer Information einer ersten digitalen Identität (418) geschaffen wurde, wobei das Verfahren umfasst:
Empfangen der zweiten digitalen Identität durch einen Identitätsmanager (426);
Empfangen der ersten digitalen Identität durch einen Identitätsprovider (410);
Prüfen der zweiten digitalen Identität durch den Identitätsprovider (410), der die zweite digitale Identität (420) erzeugt hat;
Senden der Information der ersten digitalen Identität (418) von dem Identitätsprovider (410) zu einem ersten Identitätsprovider (408), der die erste digitale Identität (418) erzeugt hat; und
Prüfen der Information der ersten digitalen Identität (418) durch den ersten Identitätsprovider (408).

11. Computerimplementiertes Verfahren nach Anspruch 10, wobei das Verfahren ferner umfasst:
Senden eines Ergebnisses der Prüfung der Information der ersten digitalen Identität (418) von dem ersten Identitätsprovider (408) an den Identitätsprovider (410).

12. Computerimplementiertes Verfahren nach einen der Anspruch 10 oder 11, wobei die erste digitale Identität (418) Zugang zu einem ersten Dienst in einer ersten Domain ermöglicht und die zweite digitale Identität (420) Zugang zu einem zweiten Dienst in einer zweiten Domain ermöglicht, und wobei das Verfahren ferner umfasst:
Verwenden des ersten Dienstes in der ersten Domain und des zweiten Dienstes in der zweiten Domain, ohne dass ein erster Identitätsmanager die erste digitale Identität gesondert geprüft hat.

13. Computerimplementiertes Verfahren, wobei eine erste digitale Identität Zugang zu einem ersten Dienst in einer ersten Domain ermöglicht und eine zweite digitale Identität Zugang zu einem zweiten Dienst in einer zweiten Domain ermöglicht, wobei die zweite digitale Identität unter Einbeziehung einer Information einer ersten digitalen Identität geschaffen wurde, und wobei das Verfahren umfasst:
Verwenden der zweiten digitalen Identität in einem dritten Dienst in der ersten Domain oder in der zweiten Domain, um Zugang zu dem dritten Dienst zu erlangen, und in dem zweiten Dienst in der zweiten Domain, um Zugang zu dem zweiten Dienst zu erlangen.

## Claims

1. A computer-implemented method for creating a second digital identity incorporating a first digital identity, the method comprising:
generating basic information incorporating the first digital identity, the basic information comprising proof of authenticity;
receiving (212) the basic information by an identity provider (232);
receiving (212) the proof of authenticity of the first digital identity by the identity provider (232); and
generating (220) the second digital identity by the identity provider (232) incorporating the basic information;
wherein the basic information is generated by a client (226), and wherein the method further comprises:
sending (212) a request for issuance of the second digital identity and sending the basic information by the client (226) to the identity provider (232);
verifying (214) the request by the identity provider (232); and
sending (222) the generated second digital identity from the identity provider (232) to the client (226).

2. The computer-implemented method according to claim 1, wherein the basic information and/or the proof of authenticity comprises a security feature.

3. The computer-implemented method according to claim 1, wherein the method further comprises:
creating a third digital identity incorporating the second digital identity, comprising the following steps of:
generating second basic information incorporating the second digital identity;
receiving the second basic information; and
generating the third digital identity incorporating the second basic information.

4. The computer-implemented method according to any one of the preceding claims, wherein the request comprises a security feature as proof of authenticity of the first digital identity, and the method further comprises:
sending a request for authentication of the proof of authenticity from the identity provider (232) to a first identity provider (230) together with the proof of authenticity; and
receiving a response to the request by the identity provider (232) from the first identity provider (230), wherein the response comprises the authentication.

5. The computer-implemented method according to any one of the preceding claims, wherein the first digital identity and the second digital identity are used in different domains.

6. A computer program comprising instructions which, when executed by a computer, cause the computer to execute the method according to any one of claims 1 to 5.

7. An identity provider (232) configured for:
receiving basic information, wherein the basic information was generated incorporating a first digital identity and comprising a proof of authenticity;
receiving the proof of authenticity of the first digital identity;
receiving (212) a request for issuance of the second digital identity and sending the basic information to the client (226);
verifying (214) the request;
generating a second digital identity incorporating the basic information; and
sending (222) the generated second digital identity to the client (226).

8. A device (226) configured for:
generating basic information incorporating a first digital identity, wherein the basic information comprises a proof of authenticity;
sending the basic information to an identity provider (232);
sending a proof of authenticity of the first digital identity to the identity provider (232); and
sending (212) a request for issuance of the second digital identity and sending the basic information to the identity provider (232); and
receiving (222) the generated second digital identity from the identity provider (232).

9. A system comprising the identity provider (232) according to claim 7 and the device according to claim 8, wherein the system is configured to perform the method according to any one of claims 1 to 5.

10. A computer-implemented method for verifying a second digital identity (420) created by using information from a first digital identity (418), the method comprising:
receiving the second digital identity by an identity manager (426);
receiving the first digital identity by an identity provider (410);
verifying the second digital identity by the identity provider (410) which created the second digital identity (420);
sending the information of the first digital identity (418) from the identity provider (410) to a first identity provider (408) which generated the first digital identity (418); and
verifying the information of the first digital identity (418) by the first identity provider (408).

11. The computer-implemented method according to claim 10, wherein the method further comprises:
sending a result of the verification of the information of the first digital identity (418) from the first identity provider (408) to the identity provider (410).

12. The computer-implemented method according to any one of claim 10 or 11, wherein the first digital identity (418) enables access to a first service in a first domain and the second digital identity (420) enables access to a second service in a second domain, and wherein the method further comprises:
using the first service in the first domain and the second service in the second domain without a first identity manager having separately verified the first digital identity.

13. A computer-implemented method, wherein a first digital identity enables access to a first service in a first domain and a second digital identity enables access to a second service in a second domain, wherein the second digital identity was created by using information from a first digital identity, and wherein the method comprises:
using the second digital identity in a third service in the first domain or in the second domain to gain access to the third service, and in the second service in the second domain to gain access to the second service.

## Revendications

1. Procédé mis en œuvre par ordinateur pour la création d'une deuxième identité numérique en tenant compte d'une première identité numérique, ledit procédé comprenant :
la génération d'informations de base en tenant compte de la première identité numérique, lesdites informations de base comprenant une preuve d'authenticité ;
la réception (212) des informations de base par un fournisseur d'identité (232) ;
la réception (212) de la preuve d'authenticité de la première identité numérique par le fournisseur d'identité (232) ; et
la génération (220) de la deuxième identité numérique par le fournisseur d'identité (232) en tenant compte des informations de base ;
où les informations de base sont générées par un client (226), et où ledit procédé comprend en outre :
l'envoi (212) d'une demande d'établissement de la deuxième identité numérique et l'envoi des informations de base par le client (226) au fournisseur d'identité (232) ;
la vérification (214) de la demande par le fournisseur d'identité (232) ; et
l'envoi (222) de la deuxième identité numérique générée par le fournisseur d'identité (232) au client (226).

2. Procédé mis en œuvre par ordinateur selon la revendication 1, où les informations de base et/ou la preuve d'authenticité comprennent une caractéristique de sécurité.

3. Procédé mis en œuvre par ordinateur selon la revendication 1, ledit procédé comprenant en outre :
la création d'une troisième identité numérique en tenant compte de la deuxième identité numérique, comprenant les étapes suivantes :
la génération de deuxièmes informations de base en tenant compte de la deuxième identité numérique ;
la réception des deuxièmes informations de base ; et
la génération de la troisième identité numérique en tenant compte des deuxièmes informations de base.

4. Procédé mis en œuvre par ordinateur selon l'une des revendications précédentes, où la demande comprend une caractéristique de sécurité en tant que preuve d'authenticité de la première identité numérique, et où ledit procédé comprend en outre :
l'envoi d'une demande d'authentification de la preuve d'authenticité par le fournisseur d'identité (232) à un premier fournisseur d'identité (230) conjointement avec la preuve d'authenticité ; et
la réception d'une réponse à la demande par le fournisseur d'identité (232) en provenance du premier fournisseur d'identité (230), ladite réponse comprenant l'authentification.

5. Procédé mis en œuvre par ordinateur selon l'une des revendications précédentes, où la première identité numérique et la deuxième identité numérique sont appliquées dans des domaines différents.

6. Programme informatique comprenant des instructions qui, lorsque le programme est exécuté par un ordinateur, entraînent la mise en œuvre par celui-ci du procédé selon l'une des revendications 1 à 5.

7. Fournisseur d'identité (232), configuré pour :
recevoir des informations de base, lesdites informations de base ayant été générées en tenant compte d'une première identité numérique et comprenant une preuve d'authenticité ;
recevoir la preuve d'authenticité de la première identité numérique ;
recevoir (212) une demande d'établissement de la deuxième identité numérique et envoyer les informations de base au client (226) ;
vérifier (214) la demande ;
générer une deuxième identité numérique en tenant compte des informations de base ; et envoyer (222) la deuxième identité numérique générée au client (226).

8. Dispositif (226), configuré pour :
générer des informations de base en tenant compte d'une première identité numérique, lesdites informations de base comprenant une preuve d'authenticité ;
envoyer les informations de base à un fournisseur d'identité (232) ;
envoyer une preuve d'authenticité de la première identité numérique au fournisseur d'identité (232) ; et
envoyer (212) une demande d'établissement de la deuxième identité numérique, et envoyer les informations de base au fournisseur d'identité (232) ; et
recevoir (222) la deuxième identité numérique générée en provenance du fournisseur d'identité (232).

9. Système, comprenant le fournisseur d'identité (232) selon la revendication 7 et le dispositif selon la revendication 8, ledit système étant configuré pour mettre en œuvre le procédé selon l'une des revendications 1 à *5.*

10. Procédé mis en œuvre par ordinateur pour la vérification d'une deuxième identité numérique (420) créée en tenant compte d'informations d'une première identité numérique (418), ledit procédé comprenant :
la réception de la deuxième identité numérique par un gestionnaire d'identité (426) ;
la réception de la première identité numérique par un fournisseur d'identité (410) ;
la vérification de la deuxième identité numérique par le fournisseur d'identité (410) ayant généré la deuxième identité numérique (420) ;
l'envoi des informations de la première identité numérique (418) du fournisseur d'identité (410) à un premier fournisseur d'identité (408) ayant généré la première identité numérique (418) ; et
la vérification des informations de la première identité numérique (418) par le premier fournisseur d'identité (408).

11. Procédé mis en œuvre par ordinateur selon la revendication 10, ledit procédé comprenant en outre :
l'envoi d'un résultat de la vérification des informations de la première identité numérique (418) par le premier fournisseur d'identité (408) au fournisseur d'identité (410).

12. Procédé mis en œuvre par ordinateur selon la revendication 10 ou la revendication 11, où la première identité numérique (418) permet d'accéder à un premier service dans un premier domaine et la deuxième identité numérique (420) permet d'accéder à un deuxième service dans un deuxième domaine, et où ledit procédé comprend en outre :
l'utilisation du premier service dans le premier domaine et du deuxième service dans le deuxième domaine sans qu'un premier gestionnaire d'identité ait vérifié spécifiquement la première identité numérique.

13. Procédé mis en œuvre par ordinateur, où une première identité numérique permet d'accéder à un premier service dans un premier domaine et une deuxième identité numérique permet d'accéder à un deuxième service dans un deuxième domaine, la deuxième identité numérique ayant été créée en tenant compte des informations d'une première identité numérique, et où ledit procédé comprend :
l'utilisation de la deuxième identité numérique dans un troisième service dans le premier domaine ou dans le deuxième domaine pour obtenir l'accès au troisième service, et dans le deuxième service dans le deuxième domaine pour obtenir l'accès au deuxième service.
